# EUROPÄISCHE PATENTSCHRIFT

(11) **EP 1 057 002 B1**
(45) Veröffentlichungstag und Bekanntmachung des Hinweises auf die Patenterteilung: **12.05.2004**
(21) Anmeldenummer: 99908882.6
(22) Anmeldetag: 12.02.1999
(51) Int. Cl.: G01N 11/14, G01N 33/26

(54) **VERFAHREN ZUR HERSTELLUNG VON HARZEN MIT DEFINIERTER MITTLERER MOLMASSE UND DEFINIERTER VISKOSITÄT**
METHOD FOR PRODUCING RESINS WITH A DEFINED MEAN MOLAR MASS AND DEFINED VISCOSITY
PROCEDE DE PRODUCTION DE RESINES D'UNE MASSE MOLAIRE MOYENNE ET D'UNE VISCOSITE DEFINIES

(30) Priorität: 16.02.1998 DE 19806226
(43) Veröffentlichungstag der Anmeldung: 06.12.2000
(73) Patentinhaber: BAYER AG, 51368 Leverkusen (DE)
(72) Erfinder: MORAWSKI, Jörg, D-42799 Leichlingen (DE); MÜLLER, Alfred, D-51519 Odenthal-Glöbusch (DE); WILMES, Oswald, D-51061 Köln (DE)
(86) Internationale Anmeldenummer: PCT/EP1999/000917
(87) Internationale Veröffentlichungsnummer: WO 1999/041587

(56) Entgegenhaltungen:
- DE-A- 2 017 313
- DE-A- 2 417 889
- DE-A- 2 825 414
- DE-A- 2 853 678
- DE-A- 3 802 405
- DE-A- 4 002 527

## Beschreibung

Die Erfindung betrifft ein neues Verfahren zur Herstellung von Harzen mit definierter mittlerer Molmasse und definierter Viskosität, wobei während der Herstellung kontinuierlich die Viskosität in der Reaktionsmischung bestimmt wird.

Die Herstellung von Harzen ist im Prinzip bekannt: Kunststoff-Handbuch, 3. Auflage, Carl-Hanser-Verlag, München 1993, "Methoden der Organischen Chemie" (Houben-Weyl), Georg Thieme Verlag, Ullmanns Encyclopedia of Industrial Chemistry, VCH Verlagsgesellschaft, Weinheim 1992, Stoye/Freitag: "Lackharze, Chemie, Eigenschaften, Anwendungen", Carl-Hanser-Verlag, München 1996 sowie Stoye: "Paints, Coatings and Solvents", Verlag Chemie, Weinheim 1993.

Zur Überprüfung des Reaktionsverlaufs während der Harzherstellung bzw. zur Ermittlung eines Mischungsverhältnisses einer Harzabmischung wird im allgemeinen der Mischung eine Probe entnommen. Anhand dieser Probe werden anschließend die zur Charakterisierung erforderlichen Parameter bestimmt.

Nachteilig ist hierbei der hohe Aufwand an Probennahme, Probentransport und Laboranalytik unter den geltenden Arbeitsschutzbestimmungen. In dem erforderlichen Zeitraum kann sich die Probe gegebenenfalls auch chemisch verändern. Hinzu kommt, daß Proben, die bei erhöhter Temperatur flüssig entnommen wurden, bei Raumtemperatur oft hochviskos oder gar fest sind. Eine erneute Wärmebehandlung zur Vorbereitung der Analytik kann bereits zur Schädigung der Probe führen. Gegebenenfalls kann auch Luft- bzw. Luftfeuchtigkeit einen schädigenden Einfluß auf die Probe haben.

Da also zwischen Probenahme und Ergebnis eine gewisse Zeit vergeht, in der sich sowohl die Probe, aber auch das Produkt verändern können, ist zum Zeitpunkt des Probenergebnisses eine exakte Charakterisierung des Behälterinhalts nicht mehr möglich. Aus diesem Grunde und wegen möglicher Fehlerquellen bei der Probenpräparation und Analytik kommt es vor, daß bei der chargenweisen Produktion größere Qualitätsschwankungen zwischen den einzelnen Pröduktchargen auftreten, was sich unter anderem in schwankenden mittleren Molmassen und schwankenden Viskositäten der Partien äußert. Dies wiederum führt oftmals zu Schwierigkeiten in der Weiterverarbeitung.

Die obengenannten Nachteile haben dazu geführt, daß zur Bestimmung verschiedener Stoffeigenschaften Meßeinrichtungen - hier On-line-Einrichtungen - entwickelt worden sind, die, ähnlich wie Druck- oder Temperaturmessungen, in einer verfahrenstechnischen Anlage vor Ort installiert werden können.

Aufgrund der großen Bedeutung einer genauen Viskositätsbestimmung, z.B. bei Harzen, wurden Verfahren entwickelt, mit denen die Viskosität On-line bestimmt werden kann. In der Vergangenheit wurde dies mit konventionellen Meßeinrichtngen - z.B. einem Taumelviskosimeter - versucht. Hierbei ist allerdings von Nachteil, daß die Bestimmung der Viskosität durch lokale Strömungsverhältnisse erheblich beeinflußt wird. Darüber hinaus kann es aufgrund der Produktberührung zu Anbackungen und damit zur Dekalibrierung kommen, wodurch falsche Meßergebnisse erhalten werden. Dies gilt natürlich im besonderen bei einem Reaktor zur Herstellung chemischer Produkte.

Aus der DE-A 40 02 527 ist bekannt, die Viskosität von hochviskosen Materialien über die Messung des Drehmomentes an der äußeren Tragwelle einer Rühreinrichtung zu bestimmen.

Aus diesem Grunde wurde versucht, bei der Viskositätsmessung in einem Behälter mittels On-line-Meßverfahren auf die Berührung mit der Reaktionsmischung zu verzichten. Dies gelingt bei der On-line-Messung der Viskosität über die Messung des Drehmomentes bzw. der Drehmomentsänderung an der Rührerwelle. Das Drehmoment kann beispielsweise über die Änderung der Leistungsaufnahme eines Rührmotors bestimmt werden. Nachteilig ist hierbei die geringe Empfindlichkeit und der daraus resultierende große Fehler. Üblicherweise decken Rührmotoren, die zum Teil mit Getrieben ausgestattet sind, zur Sicherstellung einer hohen Anlagenflexibilität einen großen Viskositätsbereich ab. Eine geringe Viskositätsänderung bewirkt daher nur eine geringe Leistungsänderung.

Eine genauere Drehmomentsmessung an der Rührwelle und damit eine genauere Bestimmung der Viskosität gelingt, wenn beispielsweise Sensoren in die Rührerwelle eingesetzt werden. Dies hat allerdings den Nachteil, daß bestehende Rührwerke zur Drehmomentserfassung mit großem Zeit- und Kostenaufwand umgebaut werden müssen [z.B. Chemie Ingenieur Technik 68 (1996), Seiten 268 bis 272].

Aufgabe der vorliegenden Erfindung war es daher, ein reproduzierbares Verfahren zur Herstellung von Harzen mit definierter mittlerer Molmasse und definierter Viskosität zur Verfügung zu stellen, das einfach realisierbar ist und eine gute Genauigkeit und Reproduzierbarkeit gestattet.

Diese Aufgabe konnte mit der Bereitstellung des nachstehend beschriebenen erfindungsgemäßen Verfahrens gelöst werden. Das neue Verfahren beruht auf dem Prinzip, daß man die Monomere in einem mit einem oder mehreren Rührern ausgestatteten Behälter den Herstellbedingungen der jeweiligen Harze unterwirft und gleichzeitig auf einfache Weise kontinuierlich die Viskosität der Reaktionsmischung bestimmt. Zur Bestimmung der Viskosität wird das Drehmoment der Rührerwelle indirekt über das Torsionsmoment an der Rührerwelle erfaßt. Hierzu werden Dehnungsmeßstreifen eingesetzt, wie sie z.B. zur Bestimmung des Verformungsverhaltens von Werkstoffen in ähnlicher Form seit Jahren eingesetzt werden.

Gegenstand der Erfindung ist ein Verfahren zur Herstellung von gegebenenfalls gelösten Harzen mit definierter mittlerer Molmasse und definierter Viskosität, wobei man den Herstellungsprozeß der Harze aus den jeweiligen Ausgangsstoffen in Behältern ausführt, die mit mindestens einem Rührer ausgestattet sind, und gleichzeitig kontinuierlich die Viskosität der Reaktionsmischung bestimmt, dadurch gekennzeichnet, daß die Viskosität mittels Dehnungsmeßstreifen über das Torsionsmoment an der Rührerwelle mindestens eines Rührers bestimmt wird.

Vorteilhaft ist, daß das Verfahren schnell, einfach und ökonomisch realisierbar ist, und daß sich nach diesem Verfahren Harze mit definierter mittlerer Molmasse und definierter Viskosität mit hoher Genauigkeit und Reproduzierbarkeit herstellen lassen. Die hohe Qualitätskonstanz der Produktchargen garantiert eine deutlich verbesserte Verarbeitungssicherheit.

Das erfindungsgemäße Verfahren eignet sich prinzipiell für alle Harze bw. Harzlösungen, bei deren Herstellung bzw. Abmischung (ohne chemische Reaktion), Lösung oder Einstellung eine Viskositätsänderung einhergeht.

Geeignete Ausgangsmaterialien für das erfindungsgemäße Verfahren sind die für die jeweiligen Harze benötigten, an sich bekannten Monomere, die durch chemische Reaktion zum Harz umgesetzt werden.

Beispielhaft genannt seien die in "Methoden der Organischen Chemie" (Houben-Weyl), Band E 20, Georg Thieme Verlag 1987; Kunststoff-Handbuch, Band 7: Polyurethane, 3. Auflage, Carl-Hanser-Verlag, München 1993 und Ullmanns Encyclopedia of Industrial Chemistry, VCH Verlagsgesellschaft, Weinheim 1992, genannten Polyurethane, Polyharnstoffe, Polyisocyanurate und Polycarbodiimide sowie die zu deren Aufbau benötigten Rohstoffe. Zu erwähnen sind hier die beschriebenen OH-Prepolymere, NH₂-Prepolymere, Isocyanat-Prepolymere, verkappte Isocyanat-Prepolymere, Polyisocyanate mit Uretdion-, Isocyanurat-, Carbodiimid-, Biuret- und Allophanat-Gruppen, nichtreaktive Polyurethane sowie Mischungen und Lösungen der genannten Harze. Weiterhin genannt seien die in Stoye/Freitag: "Lackharze, Chemie, Eigenschaften, Anwendungen", Carl-Hanser-Verlag, München 1996 sowie Stoye: "Paints, Coatings and Solvents", Verlag Chemie, Weinheim 1993, genannten Vinylharze, Alkydharze, Acrylatharze, gesättigte und ungesättigte Polyesterharze, Epoxidharze, Siliconharze und Melaminharze (Triazinharze).

In einer Variante eignet sich das Verfahren zur Herstellung von Abmischungen verschiedener Harze bzw. Harzlösungen der vorangehend beispielhaft genannten Art.

In einer weiteren Variante des Verfahrens kann eine Konfektionierung von Harzen bzw. Harzmischungen in Lösemitteln bzw. Lösemittelgemischen vorgenommen werden um Produkte konstanter Viskosität herzustellen. Vorzugsweise werden die in der Lackchemie üblichen Lösemittel, wie sie z.B. in Stoye/Freitag: "Lackharze, Chemie, Eigenschaften, Anwendungen", Carl-Hanser-Verlag, München 1996 sowie Stoye: "Paints, Coatings and Solvents", Verlag Chemie, Weinheim 1993 erwähnt sind, verwendet.

Geeignet sind Harze, bei deren Herstellung bei Herstellungstemperatur bei einer Viskosität im Bereich von 1 bis 100.000 mPas, vorzugsweise 10 bis 20.000 mPas gearbeitet wird sowie eine Viskositätsänderung von mindestens 1 % durchlaufen wird. Es wird vorausgesetzt, daß im Hinblick auf die Endpunktfeststellung die Viskosität im betrachteten Bereich stetig steigend bzw. fallend ist.

Die Herstellungstemperatur der Harze liegt im Bereich von 0 bis 250°C, vorzugsweise im Bereich von 15 bis 200°C. Wichtig ist, daß die vom Hersteller angegebene Grenztemperatur der Sensormeßstelle, die üblicherweise bei ca. 100°C liegt, nicht überschritten wird.

Zur Herstellung der Harze eignen sich im Prinzip die in der oben angegebenen Literatur beschriebenen Herstellungsverfahren. Die Herstellung kann in Gegenwart oder Abwesenheit von Lösungsmitteln, Katalysatoren oder sonstigen, in der Harzchemie gebräuchlichen Hilfs- und Zusatzstoffen erfolgen. Das Verfahren kann in allen zur Herstellung und Mischung entsprechender Produkte geeigneten Apparaturen und Behältern durchgeführt werden, sofern diese mit mindestens einem mechanischen Rührer ausgestattet sind.

Der Behälter ist mit einer Meßeinrichtung zur Bestimmung der Viskosität ausgestattet, die aus folgenden Komponenten besteht:
A) einem Sensor, der aus mehreren Dehnungsmeßstreifen in einer Vollbrückenschaltung besteht,
B) einem Signalverstärker,
C) einem Rotorring, mittels dem die Meßsignale berührungslos auf
D) eine Statorantenne übertragen werden.

Die Komponenten A), B) und C) sind so auf einer der Rührwerkswellen angebracht, daß diese eine viskositäts- oder massebestimmte Torsionsänderung der Rührerwelle erfassen.

Nachfolgend wird das erfindungsgemäße Verfahren anhand der beigefügten Figuren näher erläutert.

Es zeigen:
- Fig. 1: ein Vektordiagramm der bei der Scherung an der Rührerwelle auftretenden Kräfte
- Fig. 2: eine schematische Darstellung einer Vollbrückenschaltung von vier Dehnungsmeßstreifen
- Fig. 3: eine schematische Darstellung der nach dem erfindungsgemäßen Verfahren verwendeten Meßeinrichtung

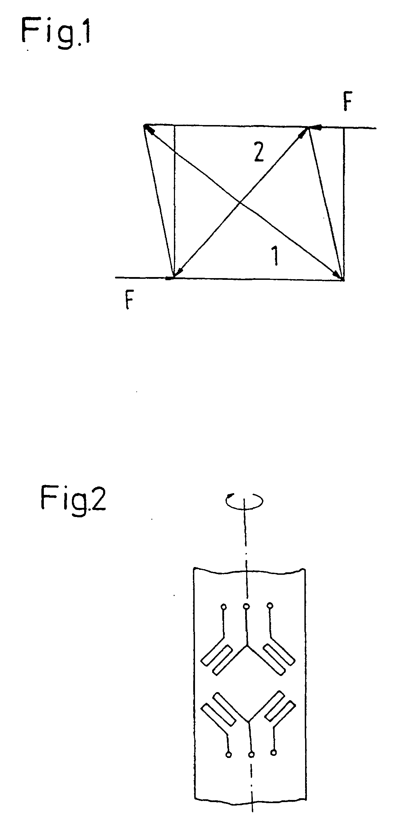

Mit der Meßeinrichtung wird die Torsion der Rührerwelle, die aus dem Drehmoment, das durch den Rührermotor übertragen wird, und dem Strömungswiderstand des Rührers in der zu rührenden Flüssigkeit resultiert, gemessen. Fig. 1 zeigt die hierbei an der Rührerwelle auftretenden Scherkräfte F, die im Gegensatz zu Normal- oder Biegespannungen neben Dehnungen (Doppelpfeil 1) auch Stauchungen (Doppelpfeil 2) verursachen, die nicht parallel zu der angreifenden Kraft F sind. Die mit dem Torsionsmoment verbundenen Dehnungen werden mit Dehnungsmeßstreifen bestimmt. Fig. 2 zeigt eine Vollbrückenschaltung von vier Dehnungsmeßstreifen, die so angeordnet sind, daß der jeweilige Winkel zur Rührerwelle 45° beträgt.

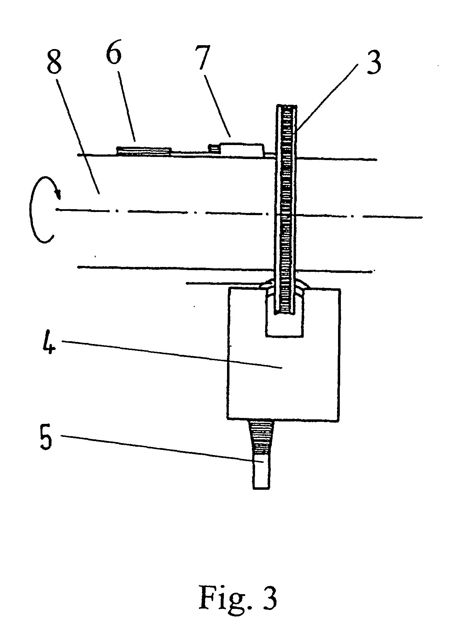

Die Meßeinrichtung wird durch Fig. 3 beschrieben. Sie besteht aus vier Elementen: Der Dehnungsmeßstreifen 6 an der Rührerwelle 8 leitet das Meßsignal an einen Verstärker 7 weiter, damit eine induktive, d.h. berührungslose, Signalübertragung über den Rotorring 3 zur Statorantenne 4 möglich ist. Das Meßsignal wird über ein Koaxialkabel 5 zu einem Auswertegerät weitergeleitet, das in verschiedenen Ausführungen (Tischgerät, 19" Einschubgehäuse und Eurokartengehäuse) lieferbar ist. In diesen Auswertegeräten wird das digitale Signal vorzugsweise in eine analoge Signalform umgewandelt. (0...10 V; 0 bzw. 4...20 mA), die für die Weiterverarbeitung vorteilhafter ist. Neben dem hier beschriebenen Signalweg werden über eine Rotor/Statoranordnung weitere Steuersignale und die Versorgungsspannung übertragen. Im Gegensatz zu den sonst verwendeten Schleifringen hat die oben beschriebene Signalübertragung den Vorteil, daß eine Verfälschung des Meßsignals durch Verschmutzung oder Verschleiß nicht auftritt. Die oben beschriebenen Komponenten können von verschiedenen Firmen (System Microdas der Fa. Volland und RMC-Sensor-Telemetrie der Fa. Manner) bezogen werden.

Die Meßeinrichtung gestattet eine Torsionsmessung über Dehnungsmeßstreifen, über die die Viskosität eines Produktes On-line im Reaktor reproduzierbar bestimmt werden kann. Hierzu müssen die nachfolgend genannten Randbedingungen eingehalten werden:
1. Eine wichtige Voraussetzung für die Bestimmung der Viskosität mit der genannten Meßeinrichtung besteht darin, daß in dem Reaktor ein laminares Strömungsverhalten vorliegt. Auch in dem Übergangsbereich zwischen laminarem und turbulentem Strömungsverhalten kann die Meßeinrichtung mit guter Genauigkeit genutzt werden. Dies wird begünstigt durch eine möglichst niedrige Drehzahl und einen kleinen Durchmesser des Rührers sowie einer hohen Viskosität des Produktes. Andererseits wird bei niedriger Drehzahl und kleinem Rührerdurchmesser die Torsion und damit das Meßsignal verkleinert, so daß hier eine Optimierung notwendig ist.
2. Die Reibungsverluste an der Abdichtung der Rührerwelle sind konstant. Zur Abdichtung sollte daher vorzugsweise eine Gleitringabdichtung verwendet werden. Andernfalls, beispielsweise bei Verwendung einer Stopfbuchse, wäre eine regelmäßige Kalibrierung nötig.
3. Die genaue Messung der Produkttemperatur ist generell von grundlegender Bedeutung. Besonders bei niedrigen Temperaturen beeinflußt ein geringer Fehler das Meßsignal erheblich. Im Einzelfall ist das zwar von der Temperaturabhängigkeit eines Produktes abhängig, doch wird gegebenenfalls eine reduntante Temperaturmessung an unterschiedlichen Positionen im Reaktor durchgeführt.
4. Neben der Temperaturmessung ist die genaue Mengenmessung eine weitere wichtige Prozeßgröße für die erfolgreiche Anwendung dieses Meßverfahrens. Es sollten daher genaue Dosier- oder wägetechnische Einrichtungen zur Massebestimmung (Meßgenauigkeit 1 bis 2 %) eingesetzt werden. Sollten während der Viskositätsmessung weitere Einsatzstoffe hinzugegeben werden, die zu einer Masseänderung über die obengenannte Meßgenauigkeit führen, dann muß eine entsprechende Kalibrierung bei der relevanten Temperatur durchgeführt werden.

Zur Durchführung des erfindungsgemäßen Verfahrens erfolgt zunächst in dem für die Herstellung gewählten Behälter eine Kalibrierung der zur Bestimmung der Viskosität eingesetzten Meßeinrichtung. Dazu wird der Behälter mit einer Substanz befüllt, deren Temperaturabhängigkeit der Viskosität bekannt ist. Bei bekanntem Behälterinhalt, d.h. bei bekannter Füllhöhe, wird für den gewünschten Temperaturbereich die gemessene Brückenspannung des Dehnungsmeßstreifens aufgezeichnet und kann mit den bekannten Viskositätsdaten korreliert werden. Ist die Viskosität des gewünschten Produktes bekannt, so kann anschließend bei dem der Kalibrierung entsprechenden Füllstand des Reaktors und der gewünschten Viskosität entsprechenden Brückenspannung des Dehnungsmeßstreifens der Herstellungsprozeß beendet werden. Eine Prozeßprobe der üblichen Art ist dann nicht mehr erforderlich.

Ist die Produktviskosität unbekannt, beispielsweise wenn das Produkt bei Raumtemperatur ein Festharz ist und eine nachträgliche Bestimmung der Viskosität, für die ein Aufschmelzvorgang erforderlich ist, der die Probe erneut thermisch belastet und zu einer Schädigung der Probe und damit zu einem falschen Meßergebnis führen kann, wählt man die nachfolgend erläuterte Vorgehensweise:

Zunächst wird bei einer Produktcharge der Endpunkt der Reaktion oder Abmischung bzw. Einstellung über eine herkömmliche Analyse bestimmt. Dies ist beispielsweise bei einem isocyanatfunktionellen Harz eine Probe, in der die NCO-Zahl bestimmt wird. Die NCO-Zahl wird nach der Methode bestimmt, die in Houben-Weyl "Methoden der Organischen Chemie" Band 14/2, Stuttgart/1963, S. 85 angegeben ist. Parallel zur Bestimmung der NCO-Zahl oder einer anderen kennzeichnenden Produkteigenschaft wird die Brückenspannung des Dehnungsmeßstreifens aufgezeichnet.

Bei den folgenden Produktchargen wird bei der dem gewünschten Probenparameter (z.B. NCO-Zahl der Probe der ersten Charge) entsprechenden Brückenspannung des Dehnungsmeßstreifens der Prozeß beendet, eine Probenahme ist nicht mehr erforderlich.

Durch das beschriebene On-line-Meßverfahren gelingt also einerseits eine On-line-Verfolgung der Viskosität über die gesamte Prozeßdauer, andererseits eine On-line-Endpunktbestimmung.

Zu beachten ist, daß bei den einzelnen Produktchargen bei der Endpunktbestimmung eine konstante Produkttemperatur vorliegt, da andernfalls der Meßwert verfälscht werden kann. Es ist zusätzlich zu beachten, daß mit konstanter Füllhöhe im Behälter gearbeitet wird. Wird die Füllhöhe verändert, etwa durch Zugabe weiterer Einsatzstoffe, so ist eine erneute Kalibrierung in relevantem Temperaturbereich erforderlich.

Mit dem erfindungsgemäßen Verfahren können Produkte mit definierter Viskosität hergestellt werden. Die Viskositäten können mit Meßgenauigkeiten bis zu ± 1 % Abweichung für den betrachteten Meßwert bei optimierter Anpassung des Meßbereichs an die Einsatzbedingungen bestimmt werden.

### Beispiele

### Beispiel 1

In diesem Beispiel wurde ein Rührwerksbehälter mit einem Volumen von 2 m³ und einem Durchmesser von 1380 mm benutzt. Der Kessel ist mit einem Gitterrührer ausgestattet (Durchmesser 700 mm, Höhe 1500 mm, Bodenabstand 82 mm, Drehzahl 60 Umdrehungen/Minute). Der Rührwellendurchmesser beträgt 80 mm. Die Rührerwelle ist mit einer Gleitringeinheit abgedichtet. Der Reaktor enthält keine Stromstörer.

Bei Raumtemperatur wird der Reaktor mit 1650 kg 2,4,6-Triisopropyl-1,3-diisocyanatobenzol befüllt. Es werden unter Rühren 80 g 1-Methyl-1-oxo-phospholen (Isomerengemisch) zugesetzt. Die On-line-Viskositätsmessung wird bei 30°C auf einen Wert von 5,0 Skalenteilen eingestellt. Die Reaktion wird durch Aufheizen der Reaktionsmischung gestartet, erkennbar ist der Fortgang der Reaktion an der Kohlendioxid-Entwicklung. Entsprechend der Gasabspaltung wird innerhalb von 10 Stunden auf 180°C aufgeheizt. Es wird 40 Stunden bei 180°C gerührt. Während dieser Zeit ist die On-line-Viskositätsmessung auf einen Wert von 60,6 Skalenteilen angestiegen. Es wird auf 160°C abgekühlt. Anschließend wird die Schmelze über ein Kühlband ausgetragen. Zur Kontrolle der Produktqualität wird zu Beginn des Austrags vom Kühlband eine Feststoffprobe genommen und fein gemörsert. In einer offenen Kapillare wird bestimmt, wann das Produkt beginnt, zusammenzusintern. Der Sinterpunkt beträgt 82 bis 84°C.

Ein Gelchromatogramm des Produktes (Lösungsmittel: Tetrahydrofuran) liefert das folgende mittlere Molekulargewicht:
M_{w}: 18270 g/mol (Gewichtsmittel des Molekulargewichts; Polystyrol-Kalibrierung)

### Beispiele 2 bis 4

In den Beispielen 2 bis 4 wurde wie in Beispiel 1 verfahren, bei 180°C wurde so lange gerührt, bis die On-line-Viskositätsmessung einen Wert von 60,6 Skalenteilen erreicht hatte. Der Sinterpunkt des Materials wurde zu Vergleichszwecken parallel bestimmt, diente jedoch in diesen Beispielen nicht der Prozeßführung. Es wurden Produkte erhalten, die praktisch identische Viskositäten und daher auch praktisch identische mittlere Molekulargewichte aufweisen.

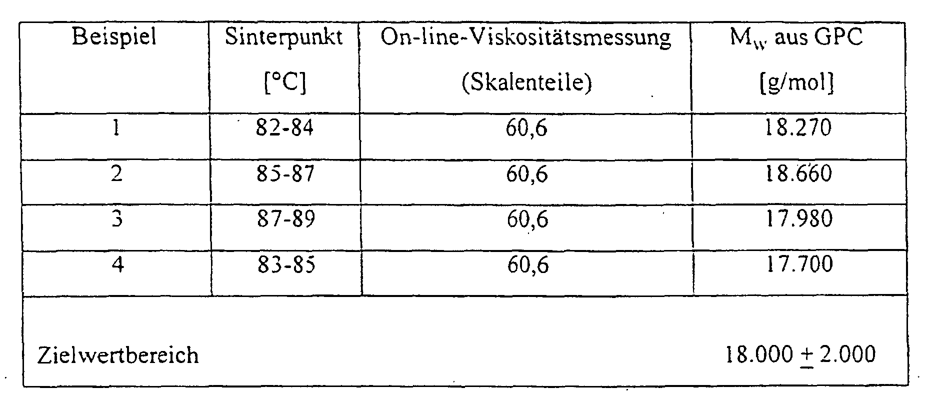

### Beispiele 5 bis 7 (Vergleichsbeispiele; nicht erfindungsgemäß)

In den Vergleichsbeispielen 5 bis 7 wurde ebenfalls wie in Beispiel 1 verfahren. Die Endpunktbestimmung der Harzherstellung erfolgte über herkömmliche Probennahme und anschließende Bestimmung des Sinterpunktes. Die Übersicht zeigt, daß die in den Produkten gemessenen mittleren Molekulargewichte starken Schwankungen unterliegen.

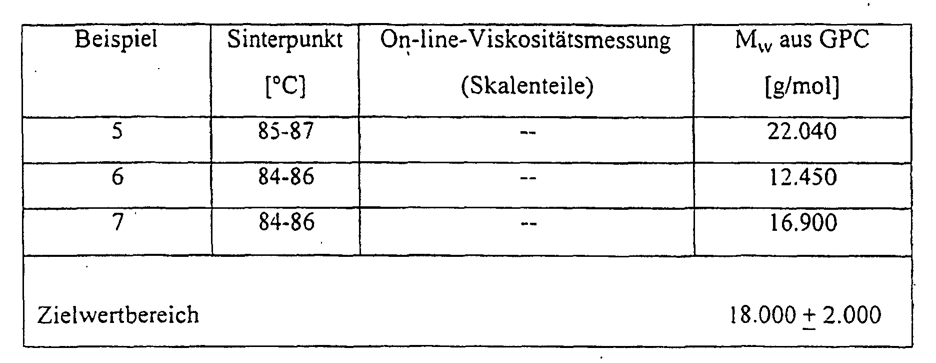

Die in den Beispielen 1 bis 4 erhaltenen Produktpartien zeigen, daß mit dem erfindungsgemäßen Verfahren Produkte mit konstanter mittlerer Molmasse erhalten werden (gute Reproduzierbarkeit). Dahingegen wird aus den Beispielen 5 bis 7, bei denen die Endpunktbestimmung über herkömmliche Probenahme und die Bestimmung des Sinterpunktes erfolgte, deutlich, daß die so hergestellten Produkte deutliche Qualitätsschwankungen aufweisen, die weit über den Toleranzbereich (Zielwertbereich) hinausgehen (stark unterschiedliche mittlere Molekulargewichte). Gründe hierfür sind einerseits die Vorbehandlung der Proben nach herkömmlicher Probenahme sowie die Bestimmung des schwer zu ermittelnden Sinterpunktes.

## Patentansprüche

1. Verfahren zur Herstellung von gegebenenfalls gelösten Harzen mit definierter mittlerer Molmasse und definierter Viskosität, wobei man den Herstellungsprozeß der Harze aus den jeweiligen Ausgangsstoffen in Behältern ausführt, die mit mindestens einem Rührer ausgestattet sind und gleichzeitig kontinuierlich die Viskosität der Reaktionsmischung bestimmt, **dadurch gekennzeichnet, daß** die Viskosität mittels Dehnungsmeßstreifen über das Torsionsmoment an der Rührerwelle mindestens eines Rührers bestimmt wird.

2. Verfahren gemäß Anspruch 1, **dadurch gekennzeichnet, daß** man die Harze durch chemische Reaktion herstellt, wobei als Ausgangsstoffe die jeweiligen Monomere eingesetzt werden.

3. Verfahren gemäß Anspruch 1, **dadurch gekennzeichnet, daß** man die Harze durch Abmischung herstellt, wobei als Ausgangsstoffe gegebenenfalls gelöste Harze eingesetzt werden.

4. Verfahren gemäß Anspruch 1, **dadurch gekennzeichnet, daß** man gelöste Harze durch Abmischung herstellt, wobei als Ausgangsstoffe gegebenenfalls gelöste Harze sowie Lösemittel eingesetzt werden.

## Claims

1. Method for producing optionally dissolved resins with defined mean molar mass and defined viscosity, wherein the process for producing the resins from the respective starting substances is carried out in containers equipped with at least one stirrer and at the same time the viscosity of the reaction mixture is continuously determined, **characterised in that** the viscosity is determined via the torsional moment at the stirrer shaft of at least one stirrer by means of wire strain gauges.

2. Method according to claim 1, **characterised in that** the resin is produced by chemical reaction, the respective monomers being used as the starting substances.

3. Method according to claim 1, **characterised in that** the resins are produced by mixing, optionally dissolved resins being used as the starting substances.

4. Method according to claim 1, **characterised in that** dissolved resins are produced by mixing, optionally dissolved resins and solvents being used as the starting substances.

## Revendications

1. Procédé pour la préparation de résines à masse moléculaire moyenne définie et viscosité définie, éventuellement en solution, la préparation étant réalisée à partir des composés de départ particuliers dans des récipients équipés d'au moins un agitateur avec détermination simultanée et continue de la viscosité du mélange de réaction, **caractérisé en ce que** la viscosité est déterminée à l'aide de bandes à mesure d'allongement par le moment de torsion de l'axe d'au moins un agitateur.

2. Procédé selon la revendication 1, **caractérisé en ce que** l'on prépare les résines par une réaction chimique dont les composants de départ sont les monomères appropriés.

3. Procédé selon la revendication 1, **caractérisé en ce que** l'on prépare les résines par mélange, les composants de départ consistant en résines éventuellement à l'état de solutions.

4. Procédé selon la revendication 1, **caractérisé en ce que** l'on prépare les résines en solution par un mélange, les composants de départ étant les résines, éventuellement en solution, et un solvant.
